# EUROPÄISCHE PATENTANMELDUNG

(11) **EP 1 391 337 A1**
(43) Veröffentlichungstag der Anmeldung: **25.02.2004**
(21) Anmeldenummer: 02018673.0
(22) Anmeldetag: 21.08.2002
(51) Int. Cl.: B60J 10/00

(54) **Variabler Klemmfuss für Dichtungen**

(71) Anmelder: ContiTech Profile GmbH, 30165 Hannover (DE)
(72) Erfinder: Jimenez, Victor Manuel Simon, 26580 Arnedo (ES)
(74) Vertreter: Schneider, Egon

(57) **Zusammenfassung**

Variabler Klemmfuß für Dichtungen zum Aufstecken auf Blechflansche unterschiedlicher Dicke, insbesondere auf Blechflansche von Automobilkarossen, um beweglich gegeneinander angeordnete Blechteile gegeneinander abzudichten, bestehend aus innerhalb des Klemmfußes angeordnete Klemmlippen, die auf das Blech aufgeschoben werden und eine lösbare Verbindung zwischen Blech und Klemmfuß schaffen, wobei eine zusätzliche umklappbare und/oder abtrennbare Klemmlippe an mindestens einer Seite des Klemmfußes angeordnet ist, die bei sich verringernder Blechflanschdicke in den Klemmfuß einklappbar ist und die sich verringernde Blechflanschdicke ausgleicht, wobei eine haltbare Verbindung zwischen Klemmfuß und Blech entsteht.

## Beschreibung

Die Erfindung betrifft einen variablen Klemmfuß für Dichtungen entsprechend dem Oberbegriff des ersten Anspruches.

Der variable Klemmfuß für Dichtungen ist geeignet zum Aufstecken auf Blechflansche, insbesondere auf Blechflansche, die über ihre Länge eine unterschiedliche Dicke aufweisen. Das ist besonders bei Blechflanschen von Automobilkarossen der Fall, bei denen beweglich angeordnete Bauteile, beispielsweise Türen und Klappen, gegen die Karosserie abdichten. Am variablen Klemmfuß können verschiedenste Dichtungsprofile angeordnet sein.

Die Schlitze an Automobilkarosserien, die zwischen der Karosserie und ihren Öffnungen und deren Türen oder Klappen vorhanden sind, werden durch Dichtungsprofile abgedichtet, die auf einen Blechflansch mittels Klemmfuß aufsteckbar sind. Dazu muss das Dichtungsprofil oder der Klemmfuß mit seinen Dichtlippen auf einen Blechflansch der Karosserie, des Deckels oder Tür aufgeschoben werden. Das Dichtungsprofil weist dazu eine gewisse Andruckkraft in seinem, vorzugsweise U-förmigen, Profil gegenüber den beiden Blechseiten auf, auf die es aufgesteckt wurde.

Dazu sind verschiedenste Lösungen in der Automobilindustrie bekannt. In EP 0 836 961 A1 ist ein Halteprofil zu sehen, welches in seinem Inneren einen Festigkeitsträger aufweist, wobei an der Innenseite des U-förmigen Profils Dichtlippen angeordnet sind, mit denen sich das U-förmige Profil gegenüber dem Blech, auf das es aufgeschoben wird, abstützt. Durch eine unterschiedliche Ausgestaltung der Dichtlippen im Hinblick auf ihre Form und auf ihren Winkel wird erreicht, dass auch die Oberkante des U-förmigen Profils dicht an dem Blech auflliegt, auf das das Profil aufgesteckt wurde und kein Wasser in das Profil hineinlaufen kann. Sofern sich die Flanschdicke ändert, beispielsweise bei doppelter oder mehrfacher Blechlage oder veränderter Blechdicke, muss ein breiteres U-förmiges Profil gewählt werden.

Aus EP 0 604 007 B1 ist ein Dichtungs-, Verzierungs- oder Arretierungsstreifen bekannt, der Klemmlippen im Inneren des U-förmigen Profils aufweist, wobei auf der einen Seite mehrere kurze Klemmlippen angeordnet und auf der anderen Seite eine lange Klemmlippe angeordnet ist. Auch dieses Dichtungsprofil ist nur für eine bestimmte vorgegebene Blechflanschdicke geeignet. Für Blechflansche, die die doppelte oder mehrfache Dicke aufweisen, müssen jeweils andere Profile aufgesetzt werden, um eine dichte und feste Verbindung zu erreichen.

Auch aus DE 180 05 610 C2 ist eine Dichtung, insbesondere eine Profildichtung, ersichtlich, die in ihrem Inneren mit einer Drahtseele versehen ist, welche die elastische Rückstellkraft beim Auseinanderspreizen des Profils einbringt, wobei im Inneren des Profils angeordnete Lippen ein Halten und ein Abdichten gegenüber dem Blech, auf das sie aufgesetzt sind, gewährleistet. Auch diese Dichtung ist nur für ganz bestimmte gleichbleibende Blechflanschdicken geeignet. Lange Kanten, insbesondere bei Kraftfahrzeugkarossen, weisen häufig sich ändernde Blechflanschdicken auf, wobei die Dicke des Blechflansches um ein Mehrfaches veränderbar ist. Nach bestehendem Stand der Technik müssen dann jeweils andere Dichtfüße oder Dichtungsprofile aufgesetzt werden, die an den Übergangsstellen miteinander zu verbinden sind, was einen erhöhten Fertigungsaufwand darstellt oder aber an den Übergangsstellen lose aneinanderstoßen, was nach einer gewissen Zeit einen erhöhten Verschleiss und Mängel zur Folge hat.

Es ist daher Aufgabe der Erfindung, einen Klemmfuß zu entwickeln, mit dem ein zuverlässiges Abdichten für verschiedene sich in der Dicke verändernde Blechflanschen mit geringem Aufwand und bei fester Montage möglich ist.

Diese Aufgabe wird durch einen variablen Klemmfuß für Dichtungen nach den Merkmalen des ersten Patentanspruches gelöst.

Unteransprüche geben vorteilhafte Ausgestaltungen der Erfindung wieder.

Der variable Klemmfuß für Dichtungen zum Aufstecken auf Blechflansche unterschiedlicher Dicke weist innerhalb seiner U-Form Klemmlippen auf, mit denen der Klemmfuß auf das Blech aufgeschoben wird, wobei mindestens an einer Seite des Klemmfußes eine zusätzliche Lippe angeordnet ist, die bei sich verringernder Blechflanschdicke in das Innere des Klemmfußes geklappt werden kann, womit die sich verringernde Blechflanschdicke ausgeglichen wird und eine haltbare und dichte Verbindung zwischen Klemmfuß und dem Blech entsteht. Das Profil besteht aus ' elastischem Material, beispielsweise Gummi. Das U-förmige Profil verfügt über eine elastische Rückstellkraft, mit dem die Klemmlippen gegen das Blech gedrückt werden. Die elastische Rückstellkraft kann durch die Wahl des elastischen Materials erreicht werden oder aber auch durch das Einlagern eines Festigkeitsträgers, der beispielsweise aus Metall oder einem anderen geeigneten Werkstück, beispielsweise einem Kunststoff, bestehen kann.

Damit die zusätzliche Lippe am Klemmfuß unproblematisch umknickbar ist, ist zwischen der zusätzlichen Dichtlippe und dem Klemmfuß eine Sollknickstelle entlang des Profils angeordnet. An dieser Sollknickstelle kann in Bereichen, in denen die zusätzliche Lippe nicht in das Innere des Profils eingeschoben wird, ein leichtes Entfernen der zusätzlichen Lippe erfolgen.

Vorteilhaft ist es, wenn der Klemmfuß auf der Seite, auf der die zusätzliche Lippe angeordnet ist, weniger Klemmlippen aufweist als auf der gegenüberliegenden Seite. So können auf einer Seite beispielsweise drei und auf der anderen Seite, an der sich die zusätzliche Lippe befindet, nur zwei Klemmlippen angeordnet sein. Die Klemmlippen erstrecken sich in Richtung auf den Profilgrund des Klemmfußes und weisen in geschnittener Form die Form einer Zotte auf. Vorteilhaft ist es, die Klemmlippen innerhalb des Profils über die Länge des Profils durchgehend und ununterbrochen anzuordnen. Es ist natürlich auch denkbar, aus Konstruktionsgründen Unterbrechungen anzuordnen. Das Herstellen des erfindungsgemäßen Klemmfußes erfolgt in vorteilhafter Weise durch Extrudieren.

Der erfindungsgemäße Klemmfuß für Dichtungen kann an völlig verschiedenen Dichtungsformen angeordnet sein und kann per Hand oder mit Hilfe von Montagewerkzeugen, beispielsweise einer Rollformingmaschine, auf die dafür vorgesehenen Bleche aufgesetzt werden und weist den Vorteil auf, dass bei sich ändernder Blechflanschstärke ein variabler Klemmfuß für die Dichtung vorhanden ist, der je nach vorhandener Flanschdicke durch Umklappen der zusätzlichen Lippe für einen festen Halt des Klemmfußes sorgt, wobei es problemlos möglich ist, an den Stellen, an denen die zusätzliche Lippe nicht benötigt wird, diese an der Sollknickstelle abzutrennen.

Im Folgenden wird die Erfindungen an vier Figuren und einem Ausführungsbeispiel näher erläutert. Die Figuren zeigen:
- Figur 1:: U-förmiger Klemmfuß im Schnitt
- Figur 2:: U-förmiger Klemmfuß auf einem Vierfach-Blech im Schnitt
- Figur 3:: U-förmiger Klemmfuß an einem einfachen Blech mit eingeklappter zusätzlicher Lippe
- Figur 4:: U-förmiger Klemmfuß auf einem Vierfach-Blech mit entfernter zusätzlicher Lippe

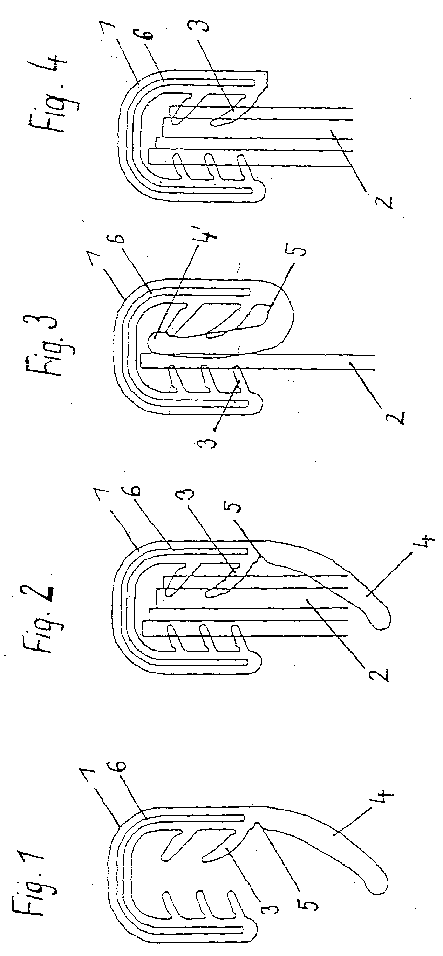

Im Ausführungsbeispiel wird der erfindungsgemäße Klemmfuß 1 auf die Kante eines Bleches 2 aufgesetzt, welches von einfacher Blechstärke auf die vierfache Blechstärke variiert. Der aufzusetzende Klemmfuß 1 ist in Figur 1 gezeigt. Er ist in seinem Inneren durch einen zusätzlichen Festigkeitsträger 6 verstärkt, der für den nötigen Anpressdruck gegenüber dem Blech 2 sorgt. Im Inneren des Klemmfußes 1 sind fünf Klemmlippen 3 angeordnet, wobei auf der Seite mit der zusätzlichen Lippe 4 zwei Klemmlippen 3 und an der gegenüberliegenden Seite drei Klemmlippen 3 angeordnet sind. An den Klemmfuß 1 ist im vorliegenden Fall nur an einer Seite die zusätzliche Lippe 4 angeordnet, deren Länge in etwa der Länge des Profilarmes des Klemmfußes 1 entspricht. An dieser zusätzlichen Lippe 4 ist eine Sollknickstelle 5 angeordnet, wodurch ein leichteres Einknicken ins Innere des Profils und ein besseres Entfernen für den Fall möglich ist, dass die zusätzliche Lippe 4 nicht benötigt wird. Dieser Klemmfuß 1 wird nun über seine gesamte Länge auf vier aufeinanderliegende Bleche 2 einer Karosserie aufgesetzt, wobei der Festigkeitsträger 6 für ein festes Anliegen der Klemmlippen 3 sorgt, die im vorliegenden Fall nur prinzipiell und nicht in Funktion gezeigt sind, wobei die zusätzliche Lippe 4 gegen das Blech 2 drückt. In dem Bereich, in dem ihr keine weitere Funktion zukommt, kann sie entfernt werden, wie das in der Figur 4 dargestellt wird. In Bereichen, in denen lediglich ein Blech 2 vorhanden ist, wird die zusätzliche Lippe 4 ins Innere des Klemmfußes 1 gelegt, so dass gegen die umgeknickte zusätzliche Lippe 4' die Haltelippen 3 wirken können und ein festes Anliegen des U-förmigen Klemmfußes gewährleistet ist. Auf diese Weise wird erreicht, dass mit geringem Montageaufwand bei wechselnder Blechflanschdicke ein und der selbe Klemmfuß 1 verwendbar ist. Selbstverständlich können völlig beliebige Formen von Dichtungen an diesem Klemmfuß 1 angebracht werden, der im vorliegenden Ausführungsbeispiel nur als U-förmiger Klemmfuß 1 auf einem oder mehreren Blechen 2 dargestellt ist.

### Liste der verwendeten Bezugszeichen

- 1: Klemmfuß
- 2: Blech
- 3: Klemmlippe
- 4: Zusätzliche Lippe
- 4': Zusätzliche Lippe in eingeklapptem Zustand
- 5: Sollknickstelle
- 6: Festigkeitsträger in 1

## Patentansprüche

1. Variabler Klemmfuß für Dichtungen zum Aufstecken auf Blechflansche unterschiedlicher Dicke, insbesondere auf Blechflansche von Automobilkarossen, um beweglich gegeneinander angeordnete Blechteile gegeneinander abzudichten, bestehend aus
- innerhalb des Klemmfußes (1) angeordnete Klemmlippen (3), die auf den Blechflansch (2) aufgeschoben werden und eine lösbare Verbindung zwischen Blechflansch (2) und Klemmfuß (1) schaffen, wobei
- eine zusätzliche umklappbare und/oder abtrennbare Lippe (4) an mindestens einer Seite des Klemmfußes (1) angeordnet ist, die bei sich verringernder Dicke des Blechflansches in den Klemmfuß (1) einklappbar ist und die sich verringernde Blechflanschdicke ausgleicht, wobei eine haltbare Verbindung zwischen Klemmfuß (1) und Blech (2) entsteht.

2. Variabler Klemmfuß nach Anspruch 1, **dadurch gekennzeichnet, dass** zwischen Klemmfuß (1) und Lippe (4) eine Sollknickstelle (5) angeordnet ist.

3. Variabler Klemmfuß nach den Ansprüchen 1 und 2, **dadurch gekennzeichnet, dass** der Klemmfuß (1) in seinem Inneren durch einen Festigkeitsträger (6) verstärkt ist.

4. Variabler Klemmfuß nach den Ansprüchen 1 bis 3, **dadurch gekennzeichnet, dass** der Klemmfuß (1) in seinem Inneren fünf Klemmlippen (3) aufweist.

5. Variabler Klemmfuß nach den Ansprüchen 1 bis 4, **dadurch gekennzeichnet, dass** die Stärke der zusätzlichen Lippe (4) der Stärke der sich verringernden Dicke des Blechflansches (2) entspricht.

6. Variabler Klemmfuß nach den Ansprüchen 1 bis 5, **dadurch gekennzeichnet, dass** sein Herstellen durch Extrudieren erfolgt.
